# EUROPEAN PATENT APPLICATION

(11) **EP 1 414 253 A1**
(43) Date of publication of application: **28.04.2004**
(21) Application number: 03715779.9
(22) Date of filing: 08.04.2003
(51) Int. Cl.: H04Q 7/28

(54) **BASE STATION APPARATUS AND UPSTREAM PACKET TRANSMITTING METHOD**

(30) Priority: 08.04.2002 JP 2002105513; 13.06.2002 JP 2002172864
(71) Applicant: MATSUSHITA ELECTRIC INDUSTRIAL CO., LTD., Kadoma-shi, Osaka 571-8501 (JP)
(72) Inventor: AOYAMA, Takahisa, Yokohama-shi, Kanagawa 233-0007 (JP)
(74) Representative: Grünecker, Kinkeldey, Stockmair & Schwanhäusser Anwaltssozietät
(86) International application number: PCT/JP2003/004429
(87) International publication number: WO 2003/085998

(57) **Abstract**

Based on information from a high network, transmissibility standard determiner 105 learns the location of each communication terminal near neighboring cell edges. Scheduler 107 executes scheduling in such a way that does not allow the communication terminals near the neighboring cell edges to execute uplink transmission at the same time. This scheduling information is transmitted to the communication terminals, and the communication terminals execute uplink transmission based on this scheduling. By this means, the throughput of uplink channel packet transmission can be improved.

## Description

### Technical Field

The present invention relates to a base station apparatus for use in a wireless communications system that executes packet transmission on uplink channels, and an uplink packet transmission method.

### Background Art

A scheme called HSDPA (High Speed Downlink Packet Access) has been subject to discussion as a packet transmission scheme that is directed to implementing increased peak transmission speed on the downlink, low transmission delay, and high throughput. Moreover, a scheme that supports HSDPA is proposed in TR25.848, "Physical layer aspects of UTRAHigh Speed Downlink Packet Access" by 3GPP (3rd Generation Partnership Project).

By the way, techniques such as this HSDPA have been developed that enable downlink high speed packet communication in HDR (High Date Rate) systems and such. Among these, a technique of particular importance is the scheduling technique that determines to which communication terminals to currently assign the downlink channels. This scheduling greatly influences wireless transmission throughput, and so there have been various ideas.

Presently, there are at least three types of schemes considered as scheduling techniques, namely, the Best CIR (i.e. desired signal to interference signal power ratio) scheme, the Round Robin scheme (hereinafter "RR scheme"), and Proportional Fairness (hereinafter "PF scheme").

The Best CIR scheme selects the terminal having the highest CIR, and the throughput at a base station heightens. Nevertheless, there is a shortfall that although a communication terminal near a base station may be frequently assignedpacket transmission, a communication terminal at the cell edge is assigned packet transmission less frequently.

The RR scheme assigns packet transmission to all communication terminals randomly, and, although maintaining fairness, has a shortfall of being unable to heighten the throughput much.

The PF scheme measures the average CIR level (or + α ) on a per terminal basis and assigns to the communication terminals indicating the CIR currently higher than that level, and thus maintains fairness and enables throughout improvement to an extent.

Thus, these schemes all have their advantages and disadvantages, and so currently the combination of these for use is considered.

Still, communications systems that implement the above scheduling schemes are concerned only with downlink scheduling, and not much consideration is given to uplink scheduling.

### Disclosure of Invention

It is therefore an object of the present invention to provide a base station apparatus and an uplink channel packet transmission method that can improve uplink packet transmission throughput.

This object is achieved by executing uplink packet transmission scheduling based on the locations of communication terminal apparatuses.

### Brief Description of Drawings

FIG.1 is a block diagram showing a configuration of a base station apparatus according to a first embodiment of the present invention;
FIG.2 is a block diagram showing a configuration of a base station apparatus according to a second embodiment;
FIG.3 is a block diagram showing a configuration of a base station apparatus according to a third embodiment;
FIG.4 is a drawing illustrating the operation of the third embodiment;
FIG.5 is a drawing illustrating an overview of a fourth embodiment;
FIG.6 is a block diagram showing a configuration of a base station apparatus according to the fourth embodiment;
FIG.7 is a drawing illustrating the operation of the fourth embodiment;
FIG.8 is a block diagram showing a configuration of a base station apparatus according to a fifth embodiment of the present invention;
FIG.9 is a drawing showing an example of a priority table determined at a priority determiner of a base station apparatus according to the fifth embodiment of the present invention;
FIG.10 is a drawing showing directivity pattern of a base station apparatus according to the fifth embodiment of the present invention;
FIG.11 is a drawing illustrating the density of a communication terminal apparatus according to the present invention;
FIG.12 is a block diagram showing a configuration of a base station apparatus according to a sixth embodiment of the present invention;
FIG.13A is a drawing illustrating a method of priority determination according to the sixth embodiment of the present invention;
FIG.13B is a drawing illustrating a method of priority determination according to the sixth embodiment of the present invention;
FIG.13C is a drawing illustrating a method of priority determination according to the sixth embodiment of the present invention;
FIG.14 is a diagram showing an MCS table according to the sixth embodiment of the present invention;
FIG.15 is a block diagram showing a configuration of a base station apparatus according to a seventh embodiment of the present invention;
FIG.16 is a drawing showing directivity pattern of a base station apparatus according to the seventh embodiment of the present invention; and
FIG.17 is a drawing showing a multiplexing method of individual channel control signals according to the seventh embodiment of the present invention.

### Best Mode for Carrying Out the Invention

With reference to the accompanying drawings now, embodiments of the present invention will be described in detail below.

### (First Embodiment)

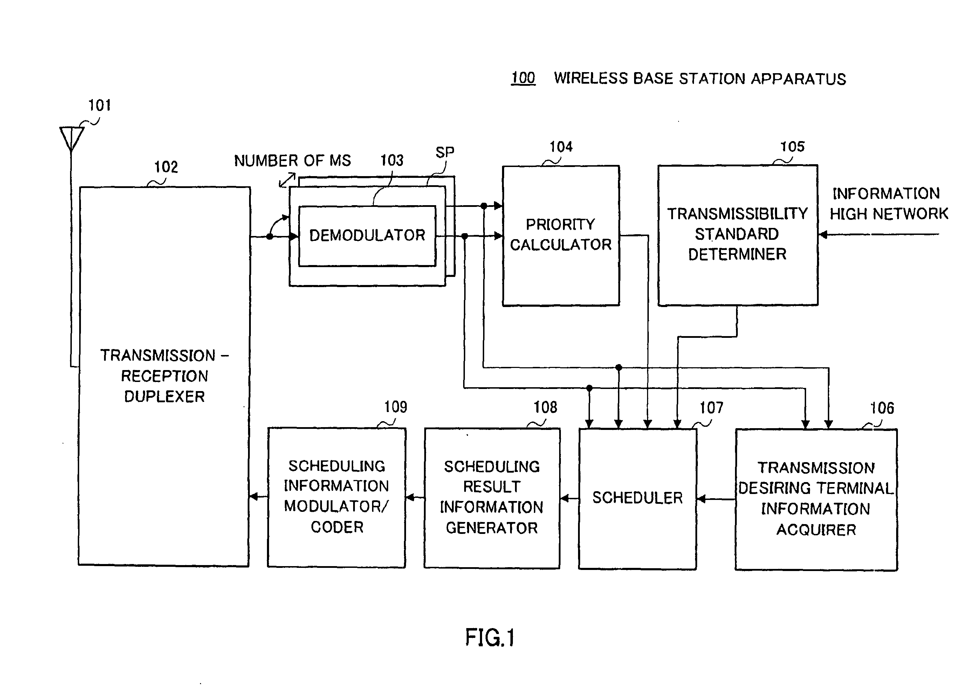

Referring to FIG.1, 100 shows an overall configuration of a base station apparatus according to the first embodiment of the present invention. Base station apparatus 100 inputs a receiving signal received by antenna 101 into demodulator 103 of a receiving signal processor SP, via transmission-reception duplexer 102 that separates the receiving signals and the transmitting signals. In actuality the receiving signal processor SP has other processing parts including a despreader and such in addition to demodulator 103, and yet for ease of explanation only demodulator 103 is shown here. Moreover, the receiving signal processor SP is provided in the same number as the communication terminals (MS) as communication partners.

Demodulator 103 demodulates the CIR (Carrier to Interference Ratio) sent from a communication terminal and sends this to priority calculator 104. Priority calculator 104 performs ranking in such a way that a communication terminal with a high CIR is given a high priority.

Transmissibility standard determiner 105, based for instance on transmission approval information from high network such as an RNC (Radio Network Controller), determines whether or not a communication terminal near the cell edge of its cell is capable of uplink transmission.

The processing by the high network will be briefly described now. From among a number of neighboring cells, the high network allows only one cell or a specific number of cells to assign uplink transmission to a communication terminal that is at the cell edge and might influence other cells. No other cell is allowed, and this is reported to the base station apparatus.

Although in this context the transmission approval information is received from the high network, base station apparatus 100 has only to learn the locations of the communication terminals near the edges of the neighboring cells and their uplink transmission schedules.

By obtaining uplink channel transmission desire information from each communication terminal obtained by demodulator 103, transmission desiring terminal information acquirer 106 learns which communication terminals currently desire uplink transmission.

Based on the information determined by transmissibility standard determiner 105, scheduler 107 identifies whether or not a communication terminal that currently suffers poor communication condition, that is, a communication terminal that is highly likely to be at the cell edge, can be selected, and, based on this result, executes the scheduling. For instance, when it is allowed to select a communication terminal at the cell edge, the scheduling is executed based on priority calculated by priority calculator 104 as is normally done, or the scheduling is executed in such a way that those communication terminals at the cell edge are selected preferentially. In contrast, when the communication terminals at the cell edge are not allowed uplink transmission, the communication terminals at the cell edge will not be selected (will not be allowed uplink transmission, that is). Incidentally, the communication terminal at the cell edge has only to be identified based on the CIR's from demodulator 103.

Scheduling result information generator 108 associates the scheduling information obtained by scheduler 107 to the communication terminals and generates information that tells each communication terminal at which transmission timing to execute transmission. Scheduling information modulator/coder 109 executes the modulation and coding processing of the scheduling information, and transmits the result to the communication terminals via transmission-reception duplexer 102 and antenna 101.

Thus according to the above configuration, at base station apparatus 100, priority calculator 104 calculates uplink transmission priorities in descending order of channel qualities, based on the information reported from the communication terminals and indicating channel qualities such as the CIR's (that is, the priorities are calculated according to the Best CIR scheme).

Moreover, at base station apparatus 100, transmissibility standard determiner 105 acquires, from the upper network, transmission approval information as to whether or not the communication terminals near the cell edge can be given transmission approval, and determines whether or not to assign uplink transmission schedule to the communication terminal near the cell edge of its cell.

Scheduler 107 executes the uplink transmission scheduling of the communication terminals in its cell based on the priorities from priority calculator 104, the uplink channel transmission desiring terminal information from transmission desiring terminal information acquirer 106, and the transmission approval information from transmissibility standard determiner 105.

Scheduler 107 executes the scheduling in such a way that the communication terminals near neighboring cell edges do not execute uplink transmission at the same time. For example, when MS 1 is near the cell edge of the cell in which base station apparatus 100 is installed and another communication terminal MS2 is at the cell of another cell near communication terminal MS1, the scheduling is executed such that communication terminal MS1 and communication terminal MS2 do not execute uplink channel transmission at the same time.

As a result, the communication terminals at the cell edge do not execute uplink transmission at the same time, so that interference between other cells caused by uplink transmission can be thus minimized. By this means, uplink transmission throughput can be improved.

Thus, according to this embodiment, scheduling is performed in such a way that does not allow communication terminals at neighboring cell edges to execute uplink transmission at the same time, so that uplink transmission throughout can be improved.

Although a case has been described with the above embodiment where the CIR is used as the channel quality between a base station apparatus and communication terminals, the present invention is not limited to this, and it is equally possible to use RSCP (Received Signal Code Power) and path loss, and this is so throughout the following embodiments.

### (Second Embodiment)

Amethod will be described here with this embodiment whereby, in case the existing scheduling techniques of the Best CIR scheme and the Round Robin scheme (RR scheme) are applied to the present invention, throughput and fairness are both maintained by effectively utilizing these schemes.

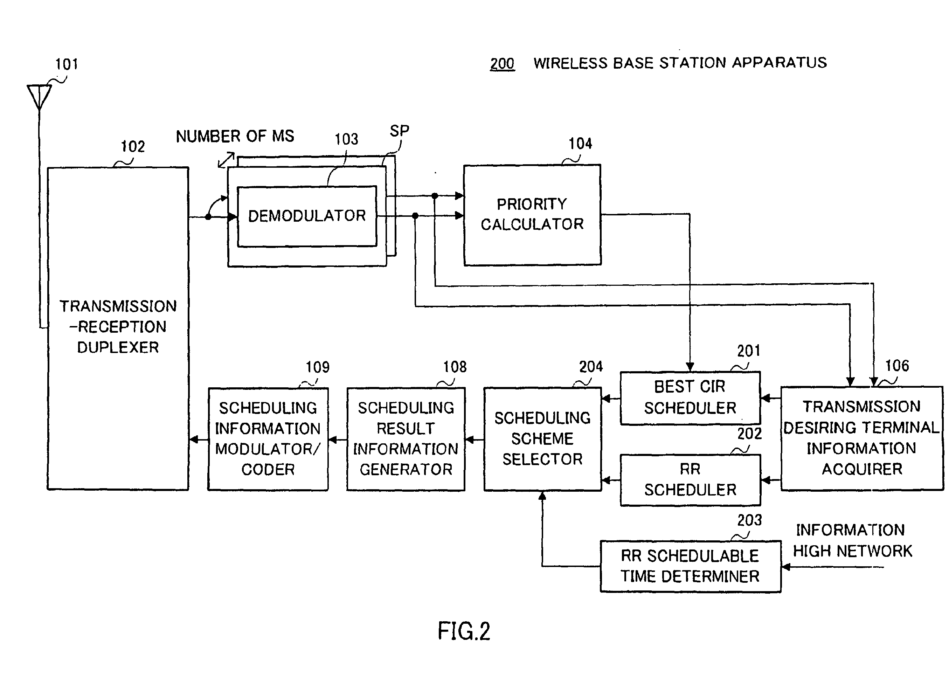

Referring to FIG. 2, in which parts identical to those of FIG.1 are assigned the same numerals, base station apparatus 200 of this embodiment has Best CIR scheduler 201 and Round Robin (RR) scheduler 202.

Best CIR scheduler 201 receives priority information arranged in descending order of CIR's from priority calculator 104, and also receives transmission desire information from transmission desiring terminal information acquirer 106, and executes scheduling by ranking the communication terminals in descending order of CIR's. RR scheduler 204 receives uplink transmission desire information from transmission desiring terminal information acquirer 106, and executes scheduling by randomly ranking the communication terminals desiring uplink transmission regardless of channel quality.

Round Robin (RR) schedulable time determiner 203 receives uplink transmission plan information in other neighboring cells and the transmission approval information described in the first embodiment from a high network. In this embodiment, information is received as to at what timing uplink transmission based on the scheduling of the PR scheme is executed in other neighboring cells. Then, RR schedulable time determiner 203 determines the time when uplink transmission is not executed in other neighboring cells based on the scheduling of the RR scheme as RR schedulable time, and sends the determined time to scheduling scheme selector 204.

Scheduler 204 selects and outputs the output from RR scheduler 202 during the time when scheduling by the RR scheme is determined possible by RR schedulable time determiner 203. In contrast, during the time when scheduling by the RR scheme is determined not possible, the output of Best CIR scheduler 201 is selected and output.

The above configuration provided, a communication terminal, when wanting to execute uplink transmission, issues a report to that effect to base station apparatus 200. This information is demodulated in demodulator 103 and thereafter kept in transmission desiring terminal information acquirer 106. The information is all sent to Best CIR scheduler 201 and RR scheduler 202 that execute scheduling, and the scheduling is executed according to the respective schemes.

To be more specific, at Best CIR scheduler 201, the communication terminals having good channel quality are preferentially selected. That is, those communication terminals at close distance from base station apparatus 200 are selected. Meanwhile, those communication terminals at the cell edge and have poor channel quality still have a likelihood of being selected at RR scheduler 202.

RR Schedulable time determiner 203 determines the timing to use the RR scheduling result. Information for this timing determination can be anything as long as the neighboring cells do not have overlapping timings. For instance, these timings may be determined at fixed period upon installation of the base station apparatus, or may be controlled by a high network as described above.

That is, it is possible that during the time when uplink transmission based on the RR scheme scheduling is not executed in other neighboring cells, uplink transmission based on the RR scheme scheduling is executed, while, during the time uplink transmission based on the RR scheme scheduling is executed in a neighboring cell, uplink transmission is executed based on the Best CIR scheme scheduling.

By this means, it is possible to minimize interference between the neighboring cells upon uplink transmission and maintain both throughput and fairness.

Between the neighboring cells, while one executes uplink transmission based on the RR scheme scheduling, the other executes uplink transmission based on the Best CIR scheme scheduling, and the reason will be explained below.

According to the Best CIR scheme, uplink transmission is allowed to the communication terminals in descending order of channel quality, and so those communication terminals near the cell edge have little chance of being selected, and the likelihood is low that the communication terminals near neighboring cell edges execute uplink transmission at the same time. As a result, interference due to uplink transmission is virtually ignorable. Moreover, given that the Best CIR scheme is selected, the throughput improves.

In contrast, according to the RR scheme, uplink transmission is randomly allowed, so that, while the communication terminals near the cell edge maybe selected on a fair basis, compared to the Best CIR scheme, the likelihood is high that the communication terminals near the cell edge are selected. So, when a neighboring cell uses the RR scheme, interference in uplink transmission between the neighboring cells can not be ignored.

The above taken into account, to minimize interference between the neighboring cells in uplink transmission and to maintain both throughput and fairness, it is most effective to execute uplink transmission based on the RR scheme scheduling in one cell, while executing uplink transmission based on the Best CIR scheme scheduling in the other cell.

Although a case has been described with the above embodiment where the Best CIR scheme is selected while in a neighboring cell the RR scheme is selected, and where the RR scheme is selected while in a neighboring cell the Best CIR scheme is selected, the present invention is by no means limited to this, and it is equally possible to select the Best CIR scheme when a communication terminal planning uplink transmission is near the cell edge of a neighboring cell and select the RR scheme when there is no communication terminal planning uplink transmission near the cell edge of the neighboring cell. Still, interference between neighboring cells in uplink transmission can be minimized, and both fairness and throughput can be maintained.

Executing scheduling based on the Best CIR scheme while the RR scheme is allowed creates no problem. The problem lies where neighboring cells select the RR scheme together, and so, other than that, any combination can be selected.

Furthermore, instead of the RR scheme, even when the PF scheme is applied, which also may select the communication terminals near the cell edge, the same effect as by the above described embodiments can be achieved.

### (Third Embodiment)

Amethod will be described here with this embodiment whereby, in case an existing adaptive array antenna (hereinafter "AAA") technique is applied to the present invention, uplink transmission throughput is further improved by effectively utilizing this AAA technique.

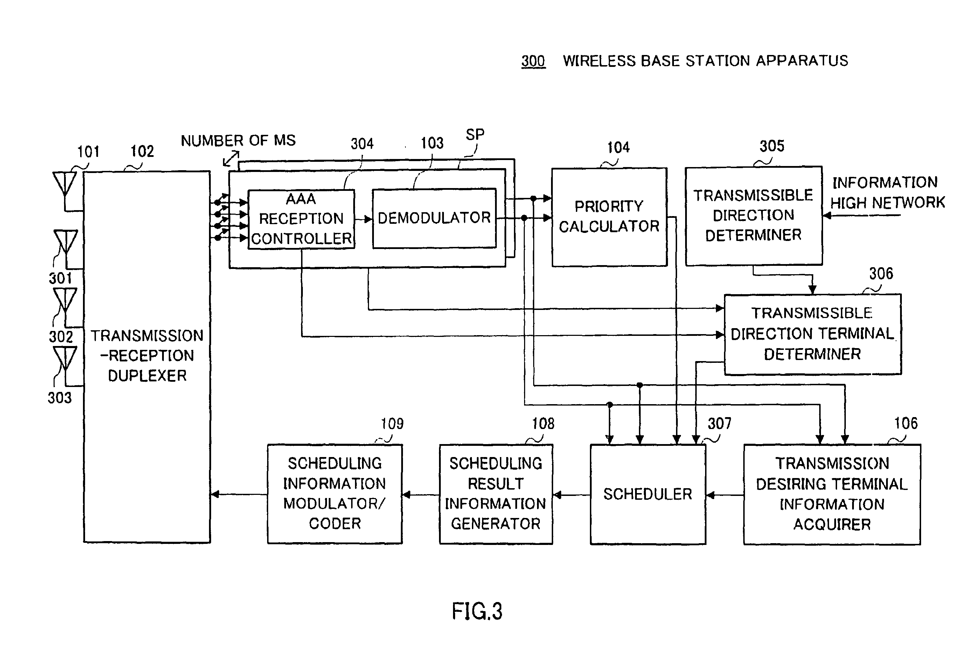

Referring to FIG.3, in which parts identical to those of FIG.1 are assigned the same numerals, base station apparatus 300 of this embodiment has multiple antennas 101, 301, 302, and 303, and receiving signals received by multiple antennas 101, 301, 302, and 303 are input into AAA reception controller 304 provided in the receiving signal processor SP via transmission-reception duplexer 102.

AAA reception controller 304 executes the arrival direction estimation and array combining and such of uplink transmitting signals by means of existing techniques of AAA processing such as weight vector calculation algorithm and signal parameter estimation algorithm. AAA reception controller 304 then sends the estimated arrival directions of the signals from the communication terminals to transmissible direction terminal determiner 306.

Transmissible direction terminal determiner 306 determines the communication terminals that can execute uplink transmission based on the arrival directions from AAA reception controller 304 and information from transmissible direction determiner 305. Transmissible direction determiner 305 then receives the information about transmissible directions from a high network and sends this information onto transmissible direction terminal determiner 306.

Scheduler 307 executes uplink transmission scheduling based on determination information from transmissible direction terminal determiner 306, uplink transmission desiring terminal information from transmission desiring terminal information acquirer 106, priority information from priority calculator 104, and the CIR's from demodulator 103.

The above configuration provided, transmissible direction determiner 305 of base station apparatus 300 receives, from the high network, the directions in which uplink transmission is possible (which may be prescribed information). These directions where uplink transmission is possible refer to the halftone-screened directional orientations. That is, for instance, where base station apparatus 300 is provided in celll, directional orientations DR1, DR2, and DR3 are considered uplink transmissible directions.

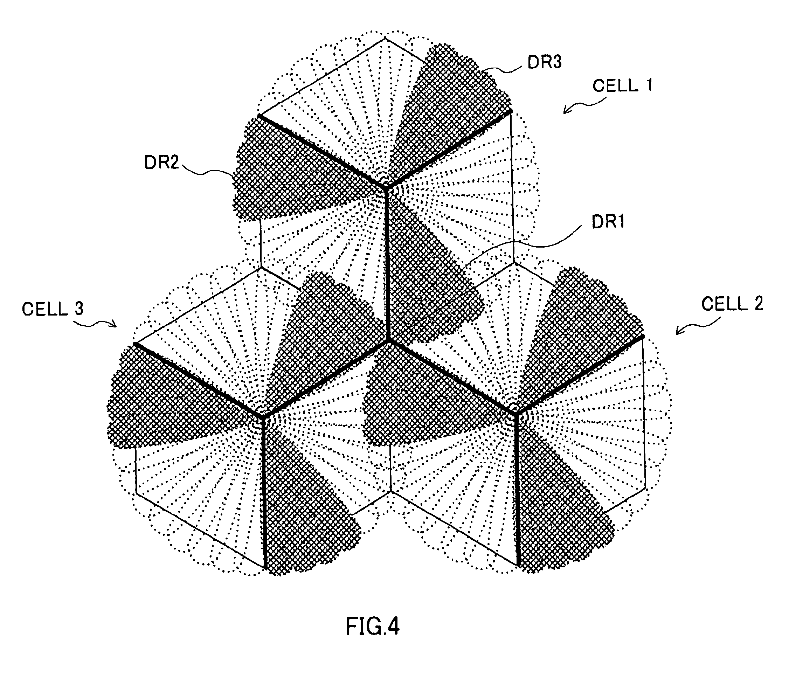

As obvious from FIG.4, these directional orientations DR1, DR2, and DR3 are the directions where the neighboring cells (i.e. cell 2 and cell 3) are not allowed uplink transmission in these directional orientations. Thus, according to this embodiment, communication terminals are allowed uplink transmission such that AAA directional reception orientations do not overlap between the neighboring cells. Incidentally, in FIG.4, the directions where uplink transmission is allowed change at every predetermined period, so that, over a period, uplink transmission is possible in all directional orientations in the cell.

At base station apparatus 300, transmissible direction terminal determiner 306 learns the terminals capable of uplink transmission using the uplink transmissible directions from transmissible direction determiner 305, and each terminal's arrival direction information from AAA reception controller 304. However, instead of the result of arrival direction estimation, it is equally possible to have location information obtained by means of GPS and such transmitted from the communication terminals and use this information.

Next, base station apparatus 300 executes scheduling with respect to these transmissible terminals at scheduler 307.

As a result, only those communication terminals in the directional orientations shown in the halftone screened pattern execute uplink transmission at the moment, so that the arrival directions of the communication terminals selected on a per cell basis become relatively distant, and base station apparatus 300 can more readily minimize interference from the communication terminals in other cells.

Thus, according to this embodiment, uplink transmission is scheduled in directivity range such that the directional reception orientations of adaptive array antenna do not overlap between the neighboring cells, so that interference from the communication terminals in other cells can be minimized and uplink transmission throughput can be improved.

Although the present embodiment concerns the overlapping of directivities between the cells, providing transmissible direction terminal determiner 306 of FIG.3 with the function of making directivities between the sectors apart as shown in FIG.4 makes it possible to remove influence between the sectors. That is, uplink transmission scheduling should be executed in such a way that the communication terminals in the cells mutually having neighboring directional orientations do not execute uplink transmission at the same time.

### (Fourth Embodiment)

In contrast to the above first through third embodiments where methods for reducing interference between neighboring cells in uplink transmission by not allowing the communication terminals near the cell edge to transmit at the same time were explained, a method will be described here in this embodiment that effectively minimizes interference in uplink transmission between sectors.

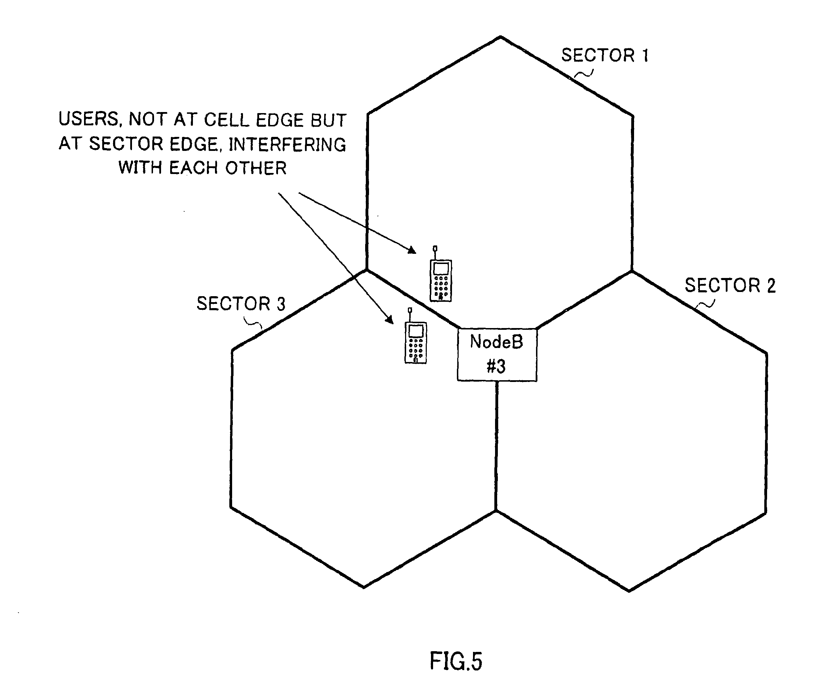

As shown in FIG.5, even those communication terminals that are not at the cell edge interfere with each other by being at the sector edge. The present inventors have focused on this point and conceived that, in addition to the processings of the first through third embodiments, executing the scheduling taking uplink transmission interference between sectors into account would further improve uplink transmission throughput.

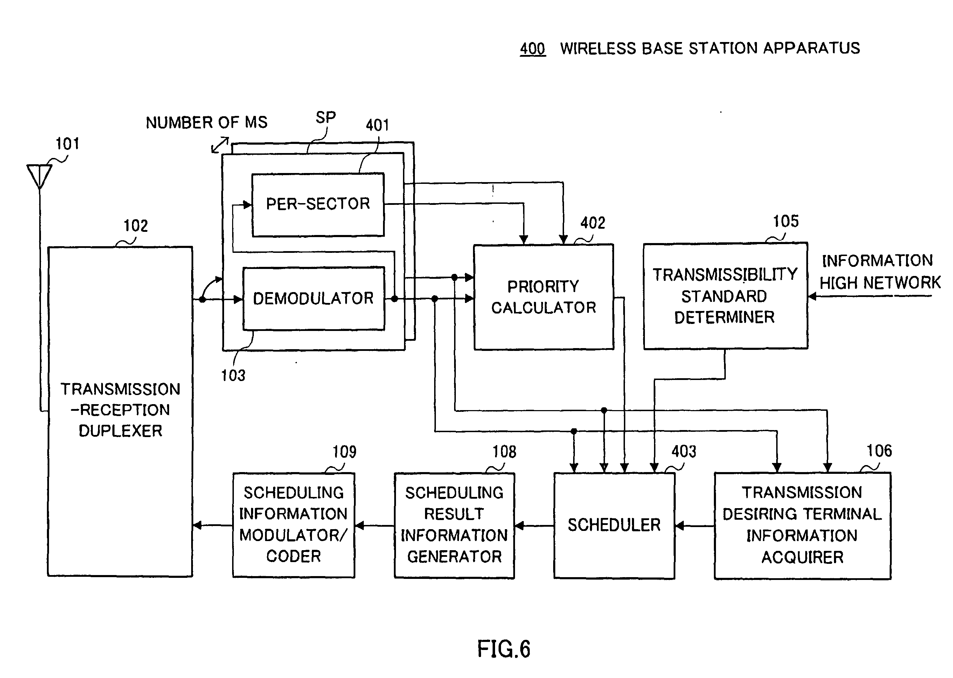

Referring to FIG. 6 in which parts identical to those of FIG.1 are assigned the same numerals, base station apparatus 400 of the present embodiment has per-sector CIR storage 401. Per-sector CIR storage 401 stores the CIR's measured at the communication terminals on a per sector basis.

In W-CDMA schemes, to support handover, a communication terminal transmits each sector' s receiving quality as a measurement report to an RNC via a base station. The assumption here is that the like of this measurement report exists. By this means, it is possible to estimate how much a signal transmitted from a communication terminal influences each sector.

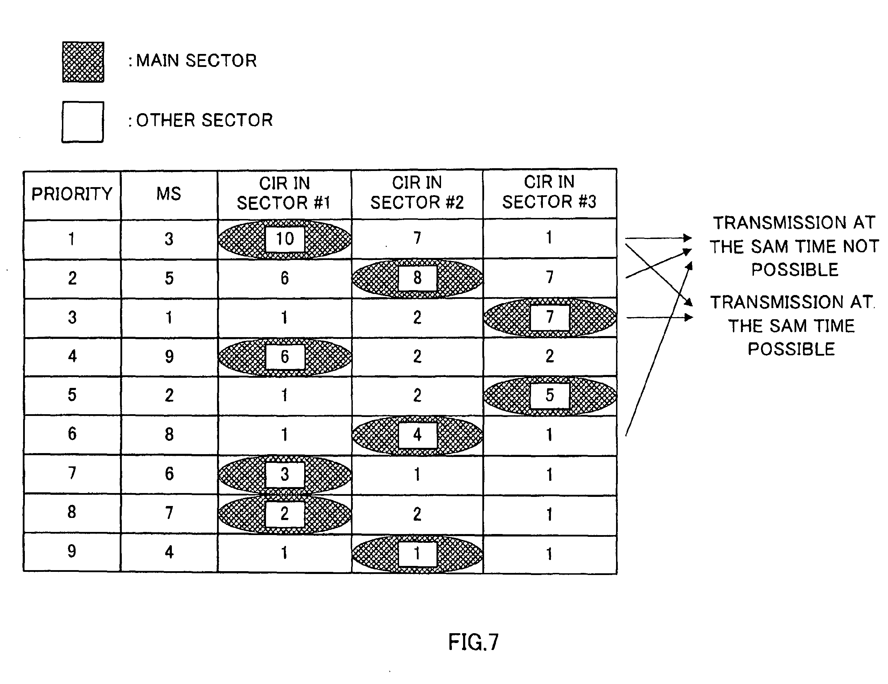

In this embodiment, priority is calculated on a per sector basis taking this influence into account. The scheduling processing of this embodiment will be described with reference to FIG.7. First, base station apparatus 400 arranges all the communication terminals in the cell in descending order of CIR's, whereupon communication terminal MS3, having the highest CIR, is selected as the terminal of the highest priority.

Communication terminal MS3 has sector #1 as its main sector, and transmission to the rest of sectors #2 and #3 at the same time is also possible. Consequently, communication terminal MS5 of the next highest priority, having sector 2 as its main sector, should principally be selected. However, MS5 has a high CIR also in sector #1, and this might influence sector #1. For this reason, communication terminal MS5 should not be selected. MS1, the communication terminal of the next highest priority, has sector #3 as its main sector, and, not influencing sector #1, is selected just so. Next, since sectors #1 and #3 are already full, communication terminals MS9 and MS5 are not selected. Communication terminal MS8, having sector #2 as its main sector, does not influence sectors #1 and #2, and so is selected.

Thus communication terminals MS in the cell are assigned in descending order of priority ranks, and by taking interference to other sectors into account, more certain transmission is enabled.

Thus, according to this embodiment, with respect to a communication terminal belonging under a given cell, the influence it causes to other sectors upon transmission is found out in addition to the receiving quality in the hosting sector, and the scheduling in the sector is executed taking into account this influence upon other sectors, so that the communication terminals that might greatly influence other sectors can be prevented from executing uplink transmission at the same time, and interference between the sectors can be minimized, and, as a result, uplink transmission throughput can be improved.

Although a case has been described with this embodiment where the number of simultaneous transmissions to each sector is 1, the present invention is by no means limited to this, and, depending on resource distribution, such scheduling is possible that allows multiple communication terminals to execute transmission at the same time. In such case, taking FIG.7 as an example, resource distribution may be executed in such a way that signals from MS3 and MS5 may be received in sector #1.

In this embodiment, the order of transmission is determined based primarily on high priority rank, yet the present invention is by no means limited to this, and it is equally possible to heighten the priority of those communication terminals influencing other sectors little and select the transmission order. That is, taking FIG.7 as an example, the priority of communication terminals MS1, MS9, and MS8 influencing other sectors little may be heightened. Further, it is also possible to combine the both schemes.

Furthermore, the uplink channel packet transmission method of this embodiment may be used together with the above first to third embodiments at the same time. Doing so enables such scheduling that minimizes interference in uplink transmission in both cells and sectors. In actuality it is effective to execute inter-cell adjustment as described in the first through third embodiments and thereafter execute the scheduling described in the fourth embodiment.

The measurement report in W-CDMA schemes is substantially averaged, and what is used in scheduling is only the CIR corresponding to the main sector, and even this is often an instantaneous value. Consequently, it is possible to estimate influence on each sector from the result of the measurement report and use the instantaneous CIR only in setting the priority order.

Moreover, for instance, depending on the fluctuation of the CIR, such correction processing may be executed whereby the value of the measurement report is corrected higher when the CIR is greater than the measurement report, and whereby the value of the measurement report is corrected lower when the CIR is less than the measurement report.

It is also possible to reduce the processing amount by adding such processing in which a threshold is determined and the influence upon each sector, when taken into account, is taken into account only when it is greater than this threshold. The setting of the threshold in this case may be done by means of fixed CIR or by using the ratio between terminals executing transmission.

Similar to the method used in the second embodiment, by determining, in a specific slot, a sector that can select a communication terminal that is likely to influence other sectors, interference in uplink transmission between sectors can also be effectively minimized. That is, a slot is determined that prioritizes, for instance, sector #1, and although in this slot sector #1 can execute assignment to those communication terminals that are likely to influence other sectors, in other sectors, assignment cannot be executed with respect to communication terminals that are likely to influence other sectors.

### (Fifth Embodiment)

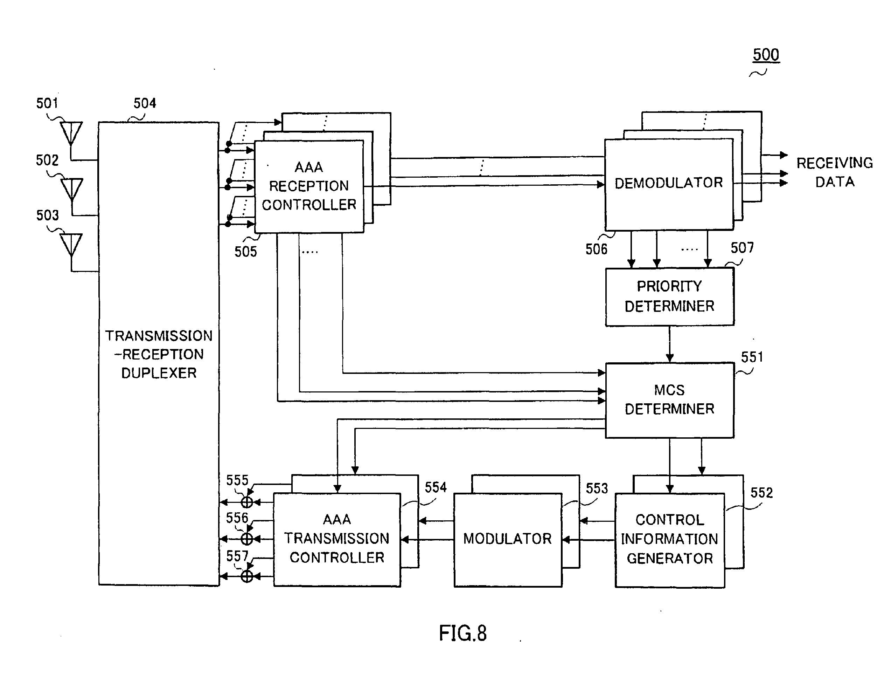

FIG.8 is a block diagram showing a configuration of base station apparatus 500 according to the fifth embodiment of the present invention.

Referring to FIG.8, base station apparatus 500 has antenna elements 501-503 that form an array antenna, transmission-reception duplexer 504, AAA (AdaptiveArray Antenna) reception controller 505, demodulator 506, and priority determiner 507. In addition, base station apparatus 500 has MCS (Modulation Coding scheme: combination of modulation scheme and error correction code) determiner 551, control information generator 552, modulator 553, AAA transmission controller 554, and adders 555-557 corresponding to antenna elements 501-503.

Transmission-reception duplexer 504 executes frequency conversion processing and amplification processing of the signals received by antenna elements 501-503 and outputs the results to AAA reception controller 505. Transmission-reception duplexer 504 executes frequency conversion processing and amplification processing of the signals output from adders 555-557, and transmits the result by radio through antenna elements 501-503.

AAA reception controller 505 is provided in the same number as the communication terminals that execute wireless communications, and despreads the output signals from transmission-reception duplexer 504, executes the processing of arrival direction estimation of the despread signals, and calculates the receiving weights and array combines the despread signals. AAA reception controller 505 then outputs the array combined signal to demodulator 506, and outputs information indicating the arrival directions of the signals to MCS determiner 551.

Demodulator 506 is provided in the same number as the communication terminals that execute wireless communication, and executes data demodulation of the signal array combined at AAA reception controller 505. Based on information that is included in the demodulated signals and that indicates each communication terminal' s transmission power, the CIR measured during the step of demodulation is corrected. For instance, the ratio between the maximum transmission power and the transmission power indicated in the information is multiplied upon the CIR. Then, demodulator 506 outputs the corrected CIR to priority determiner 507.

Priority determiner 507 determines the priorities of the communication terminals in order of the CIR's output from each demodulator 506, and outputs information indicating the priorities and CIR's to MCS determiner 551.

MCS determiner 551 estimates each communication terminal's present direction from the information indicating the arrival directions of the signals, and, based on each communication terminal' s present direction and priority, determines a communication terminal apparatus to make transmit an uplink high speed packet (hereinafter "desiring terminal"), and, based on the CIR, determines the modulation scheme and coding rate of the packet. For instance, in case of the maximum C/I method, MCS determiner 551 determines the communication terminal having the maximum CIR as the desiring terminal. Then, MCS determiner 551 outputs information indicating the desiring terminal, the modulation scheme, and the coding rate to control information generator 552. The specifics of the coding rate and modulation scheme determination method at MCS determiner 551 will be later given.

Control information generator 552 is provided in the same number as the data that can be subjected to high speed uplink packet transmission at the same time, and, based on determination by MCS determiner 551, generates a control signal indicating that the use of the USCH has been approved by the desiring terminal, and a control signal that indicates the modulation scheme and coding rate of the packet, and outputs these to modulator 553.

Modulator 553 is provided in the same number as the data that can be subjected to high speed uplink packet transmission at the same time, and modulates and spreads the control signals generated at control information generator 552. Modulator 553 outputs the spread signals to AAA transmission controller 554. Incidentally, the number of the data that can be subjected to high speed uplink packet transmission at the same time is prescribed based on the number of spreading codes and the like.

AAA transmission controller 554 is provided in the same number as the data that can be subjected to high speed uplink packet transmission, and calculates transmission weight based on the arrival direction of the signal transmitted from the communication terminal apparatus determined by MCS determiner 551. AAA transmission controller 554 multiplies the transmission weight upon the output signals from modulator 553 and thereby generates, and outputs to adders 555-557, the signals to transmit from antenna elements 501-503. Incidentally, the spreading processing that spreads the transmitting signals using spreading code can be either before the transmission weight multiplication or after the transmission weight multiplication.

From among the signals output from AAA transmission controller 554 to transmit to the communication terminal apparatuses, adder 555 adds the ones corresponding to antenna element 501 and outputs the result to transmission-reception duplexer 504. From among the signals output from AAA transmission controller 554 to transmit to the communication terminal apparatuses, adder 556 adds the ones corresponding to antenna element 502 and outputs the result to transmission-reception duplexer 504. From among the signals output from AAA transmission controller 554 to transmit to the communication terminal apparatuses, adder 557 adds the ones corresponding to 503 and outputs the result to transmission-reception duplexer 504.

Although not shown in FIG.8, in base station apparatus 500, modulators and AAA transmission controllers that transmit signals to each communication terminal apparatus by means of the DPCH are provided in the same number as the communication terminal apparatuses.

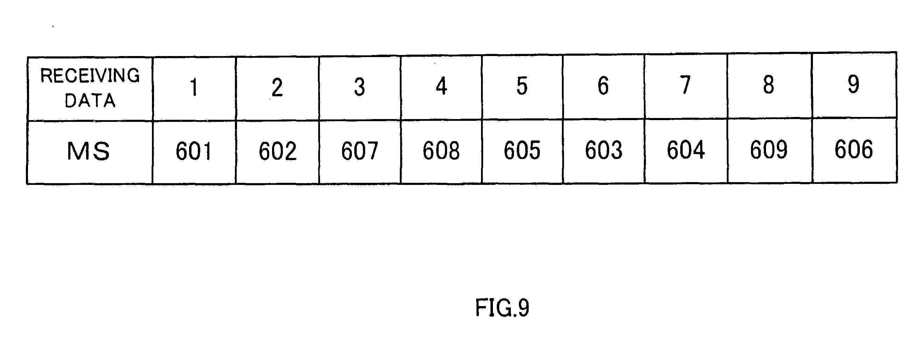

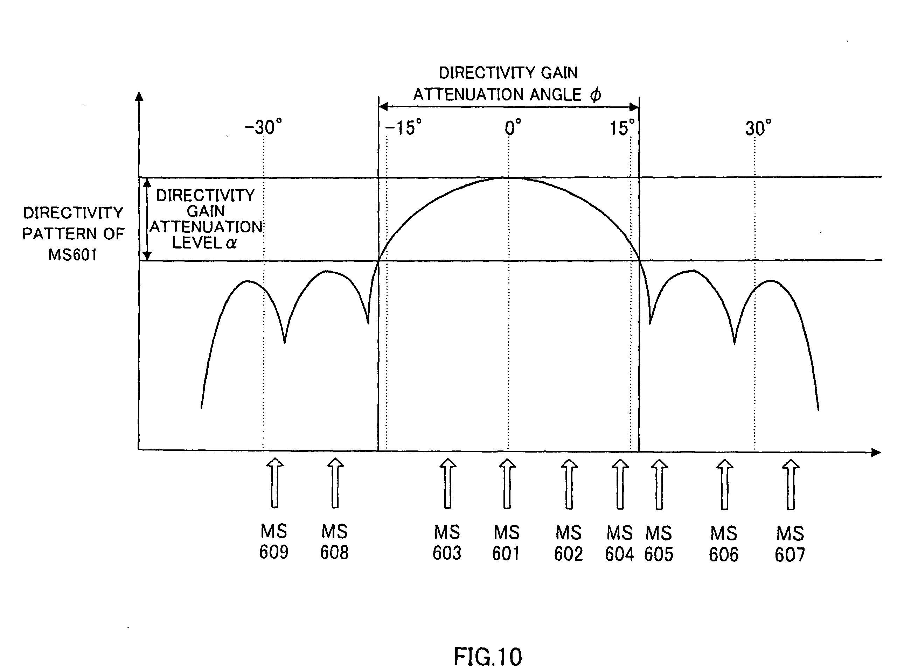

Next, the scheduling by MCS determiner 551 will be described in detail with reference to FIG.9 and FIG.10. Assume that base station apparatus 500 is presently executing wireless communications with 9 communication terminal apparatuses (MS) 601-609.

FIG.9 is a drawing showing an example of a priority table determined at priority determiner 507. In FIG.9, MCS determiner 551 allows packet transmission to MS601 of the highest priority.

FIG. 10 is a drawing showing the directivity pattern of base station apparatus 500 with respect to MS601. In FIG.10, the horizontal axis indicates the angle wherein the direction where MS601 lies is 0°, and the vertical axis indicates directivity gain.

When a transmitting signal for MS601 is seen as interference, to enable communications despite the influence of this interference, the directivity gain attenuation level α in FIG.10 is a required directivity gain attenuation level.

The directivity gain at each location is primarily determined by the directivity pattern, and so the directivity gain attenuation angle φ corresponding to the directivity gain attenuation level α is also primarily determined. Given that the influence of transmitting signals for MS601 is great, the communication terminal apparatuses in the range of the directivity gain attenuation angle φ are excluded from being subject to high speed uplink packet transmission.

In FIG.10, MS602, 603, and 604 are within the range of the directivity gain attenuation angle φ. Excluding these, base station apparatus 600 allows packet transmission to MS607 of the highest priority.

Thus, priority is determined based on uplink channel quality calculated from the CIR and each communication terminal apparatus's transmission power, packet transmission is allowed to the communication terminal apparatus of the highest priority, and, based on the directivity pattern with respect to this communication terminal apparatus, the communication terminals to allow to transmit packets at the same time are selected. By this means, where adaptive array is not in use, multiple users interfering with each other little are able to execute high speed uplink packet transmission at the same time.

Although a case has been described in this embodiment where the range of the communication terminal apparatuses allowed to execute transmission at the same time is regulated based on the directivity gain attenuation level, yet the present invention is by no means limited to this, and it is equally possible to regulate the range of the communication terminal apparatuses allowed to execute transmission at the same time based on the absolute transmission power level, where the transmission power of a communication terminal changes. Moreover, although a method has been described in this embodiment that determines priority based solely on uplink channel quality, the present invention is by no means limited to this, and it is equally possible to determine priority by taking other consideration information in addition to uplink channel quality into account. Furthermore, although this embodiment has been shown to execute arrival direction estimation using an arrival direction estimation technique by means of adaptive array antenna, yet the present invention is by no means limited to this, and it is equally possible to execute the estimation based on location information and such received from the communication terminals. Furthermore, although this embodiment has been shown to use the CIR for priority calculation, it is equally possible to use other parameters that indicate channel quality such as path loss, which indicates propagation path loss between a base station apparatus and communication terminal apparatuses. Furthermore, although this embodiment has been shown to determine priority using only channel quality, it is equally possible to use, or combine with, other information such as QoS (Quality of Service) criterion for the application in use, fairness between the users, and the user fee structure.

### (Sixth Embodiment)

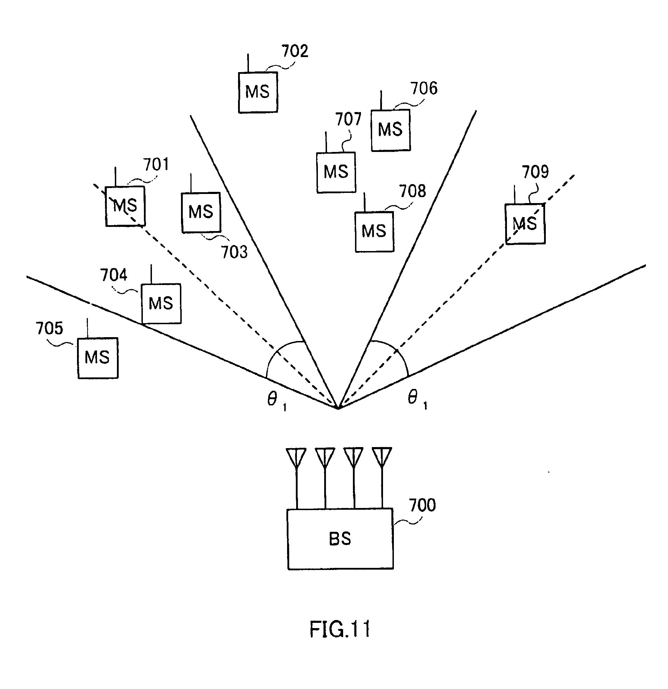

Here, with a base station apparatus provided in center, the number of other communication terminal apparatuses present within a range extending by a given angle to the right and left from the direction where a communication terminal apparatus lies is defined as the density of this communication terminal apparatus. For instance, referring to FIG.11, from base station apparatus 700 in center, communication terminal apparatuses 703 and 704 lie within the range extending to the right and left from the direction of communication terminal apparatus 701 by the angle of 1/2 θ, and so the density of communication terminal apparatus 701 is "2." Likewise, the density of communication terminal apparatus 709 is "0."

In the individual channels of the uplink channels, all the communication terminals using the USCH are executing transmission. Consequently, as the density becomes lower, the number of communication terminal apparatuses where interference cannot be minimized by means of AAA decreases, so that the receiving quality at the base station apparatus improves. Meanwhile, in the USCH, only those communication terminal apparatuses selected by the base station execute transmission. That is, in case focus is given on communication terminal apparatus 701 in FIG.11, when communication terminal apparatus 701 sends packets by means of the USCH, communication terminals 703 and 704 do not transmit packets by means of the USCH. Consequently, no change in receiving quality occurs at the base station apparatus due to the density. Therefore, the receiving quality of the USCH at a high density communication terminal apparatus is assumed to be higher than the receiving quality calculated based on the receiving quality of the individual channels of the uplink channels.

Taking this point into account, a case will be described with the sixth embodiment where, upon scheduling, the density of each communication terminal apparatus is taken into account.

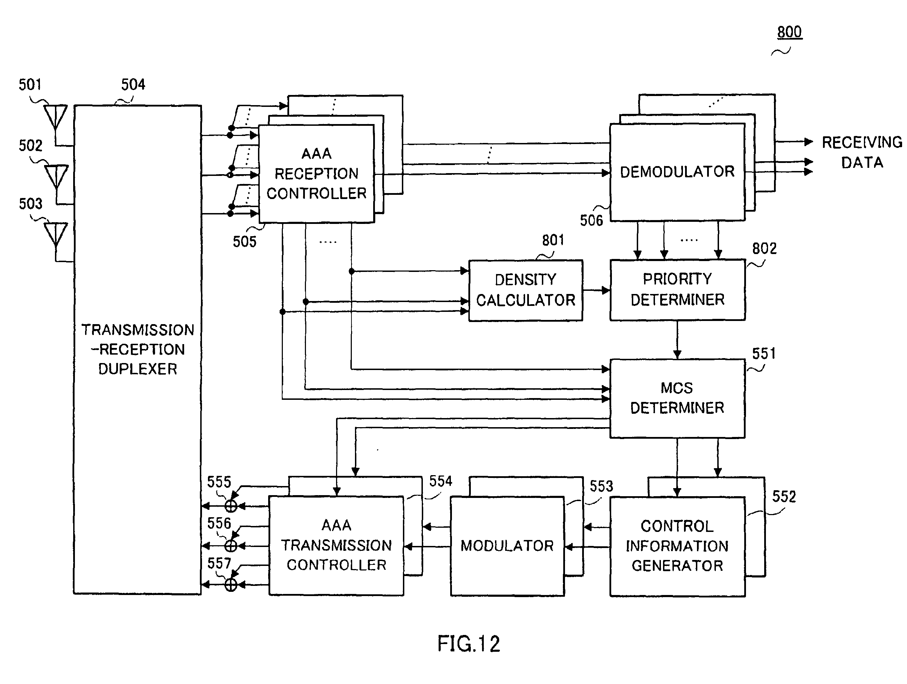

FIG.12 is a block diagram showing a configuration of base station apparatus 800 according to this embodiment. Referring to base station apparatus 800 shown in FIG.12, parts that are identical to those of base station apparatus 500 in FIG.8 are assigned the same numerals as in FIG.8 without further explanation.

Base station apparatus 800 shown in FIG.12 employs a configuration that adds density calculator 801 to base station apparatus 500 shown in FIG.8. Moreover, referring to base station apparatus 800 shown in FIG.12, the function of priority calculator 802 is different than priority determiner 507 of base station apparatus 500 shown in FIG.8.

AAA reception controller 505 outputs array combined signals to demodulator 506, and outputs information indicating the arrival directions of the signals to MCS determiner 551 and density calculator 801.

Based on the information indicating the arrival directions of the signals, density calculator 801 estimates the present direction of each communication terminal apparatus, calculates the density of each communication terminal apparatus according to the above definition, and outputs the calculation result to priority determiner 802.

Based on the density calculated at density calculator 801, priority determiner 802 corrects the CIR's output from demodulator 506, determines the priorities of the communication terminal apparatuses in order of the corrected CIR's (hereinafter "correction CIR"), and outputs information indicating the priorities and the correction CIR's to MCS determiner 551.

MCS determiner 551, based on the present directions of the communication terminal apparatuses and the priorities output from priority determiner 802, determines a desiring terminal, and, based on the correction CIR, determines the modulation scheme and coding rate of the packet.

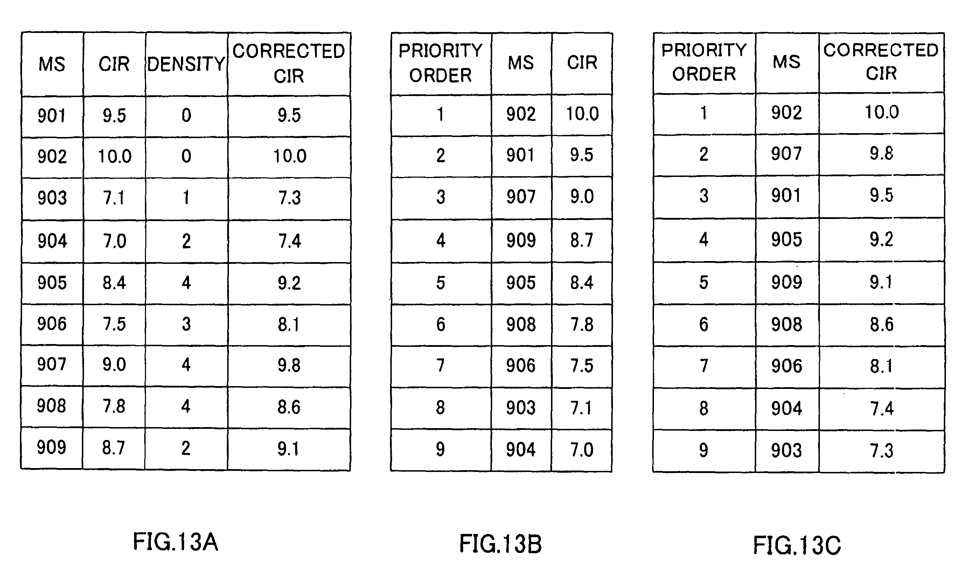

The priority determination method according to this embodiment will be described below with reference to FIG.13A, FIG.13B and FIG.13C. Assume that base station apparatus 800 is presently executing wireless communications with 9 communication terminal apparatuses (MS) 901-909. Moreover, the CIR is corrected on the assumption that there is performance deterioration of 0.2 per density 1.

FIG.13A shows the CIR, density, and correction CIR of each communication terminal apparatus. Moreover, FIG.13B shows a priority table based on the CIR's of FIG.13A, and FIG.13C shows a priority table based on the correction CIR's of FIG.13A.

Comparing FIG.13B and FIG.13C, wherein in FIG.13B the second priority corresponds to communication terminal apparatus 901, in FIG.13C, it is communication terminal apparatus 907.

Thus, by correcting the CIR's of the individual channels of the uplink channels based on the density and determining priority using the correction CIR's, the accuracy of scheduling can be improved.

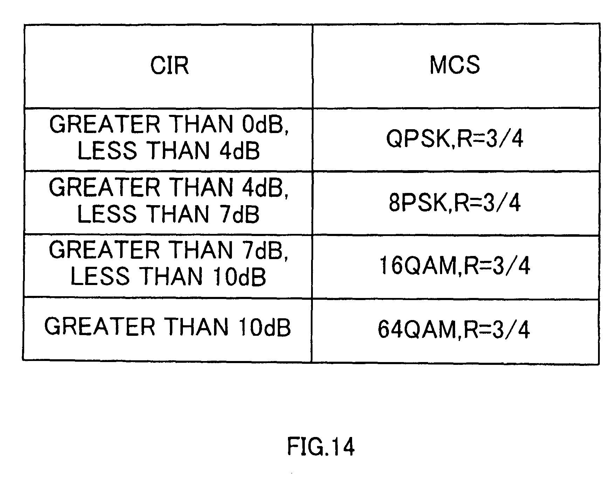

Here, MCS determiner 551, generally, holds inside a table such as shown in FIG.14, selects adequate modulation schemes and coding rates based on their CIR' s, and outputs information that indicates selected modulation schemes and coding rates to control information generator 552. In this embodiment, when the CIR's are corrected, the modulation scheme and coding rate that are selected also change.

Although a case has been described in this embodiment where the CIR is corrected by density, the present invention is by no means limited to this, and it is equal ly possible to correct the CIR by other factors such as the number of paths in multipath environment, or correct the CIR by combining multiple other factors.

### (Seventh Embodiment)

Now, upon use of HSDPA, control information transmission and power control need to be executed in the individual channels of the uplink channels and down link channels in addition to the shared channels for executing high speed packet transmission.

On the grounds that these individual channels (1) interfere with the shared channels, (2) use up code resources, and (3) carry little amount of information, the same code may be shared between multiple communication terminal apparatuses by not only code multiplexing but also by time multiplexing.

A case will be described here with the seventh embodiment where, when the individual channels are time multiplexed in a CDMAwireless communications system that uses adaptive array, the interference minimization effect described in the sixth embodiment is equalized by taking the arrival directions of the signals into account.

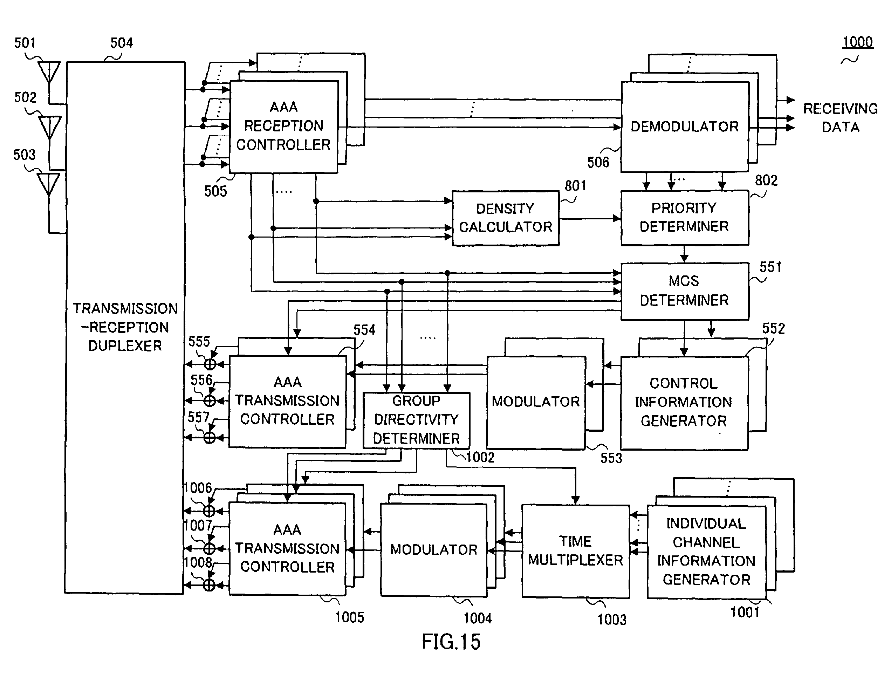

FIG.15 is a block diagram showing a configuration of base station apparatus 1000 according to this embodiment. Inbase station apparatus 1000 shown in FIG. 15, parts that are identical to those of base station apparatus 800 shown in FIG.12 are assigned the same numerals as in FIG.12 without further explanation.

Base station apparatus 1000 shown in FIG.15 employs a configuration that adds individual channel information generator 1001, group directivity determiner 1002, time multiplexer 1003, modulator 1004, AAA transmission controller 1005, and adders 1006-1008 corresponding to antenna elements 501-503, to base station apparatus 800 shown in FIG.12.

Individual channel information generator 1001 is provided in the same number as the communication terminal apparatuses that can communicate at the same time, and generates control information transmitted from the individual channels including pilot symbols and transmission power control commands, and outputs the control information to time multiplexer 103.

Based on the arrival directions of the signals from the communication terminal apparatuses, group directivity determiner 1002 divides the communication terminal apparatuses having close arrival directions into a number of groups and determines directivity on a per group basis. Group directivity determiner 1002 outputs information about the communication terminal apparatus belonging under each group to time multiplexer 1003, and information indicating each group's directivity to AAA transmission controller 1005.

Time multiplexer 1003, based on instruction from group directivity determiner 1002, time multiplexes the control information of the communication terminal apparatuses belonging under the same group, and outputs the result to modulator 1004.

Modulator 1004 is provided in the same number as the groups, and modulates and spreads the control signal time multiplexed at time multiplexer 1003. Then, modulator 1004 outputs the spread signal to AAA transmission controller 1005.

AAA transmission controller 1005 is provided in the same number as the groups, and, based on instruction from group directivity determiner 1002, calculates transmission weight on a per group basis based on instruction from group directivity determiner 1002. AAA transmission controller 1005 multiples the transmission weight upon the output signals from modulator 1004 and thereby generates the signals to transmit from antenna elements 501-503, and output them to adders 1006-1008. Incidentally, the spreading processing that spreads the transmission signals using spreading code can be either before the transmission weight multiplication or after the transmission weight multiplication.

From among the signals that are output from AAA transmission controller 1005 to transmit to the communication terminal apparatuses, adder 1006 adds the ones corresponding to antenna element 501 and outputs the result to transmission-reception duplexer 504. From among the signals that are output from AAA transmission controller 1005 to transmit to the communication terminal apparatuses, adder 1007 adds the ones corresponding to antenna element 502 and outputs the result to transmission-reception duplexer 504. From among the signals that are output from AAA transmission controller 1005 to transmit to the communication terminal apparatuses, adder 1008 adds the ones corresponding to antenna element 503 and outputs the result to transmission-reception duplexer 504.

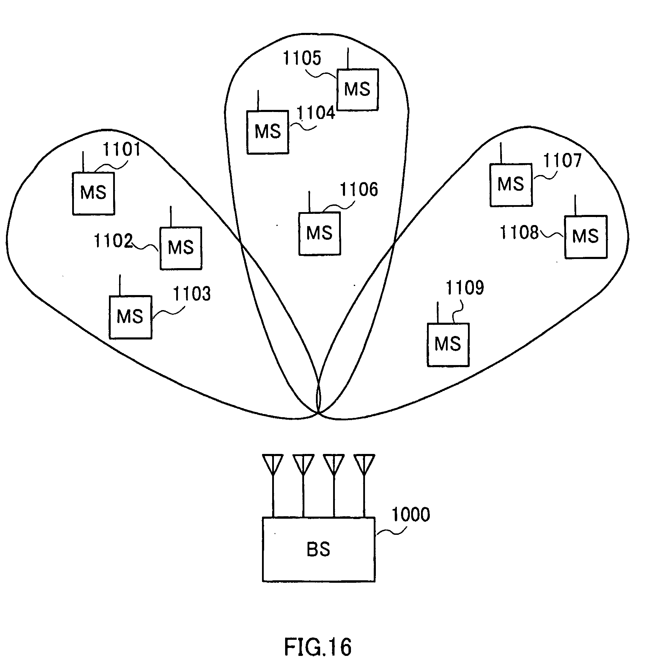

For a specific example, a case will be described here where, for instance, 9 communication terminal apparatuses (MS) 1101-1109 in communications have spatial relationships such as shown in FIG.16, and where base station apparatus 1000 of this embodiment divides them into 3 groups.

In this case, group directivity determiner 1002 determines communication terminal apparatuses 1101-1103 having close arrival directions as groupA, communication terminal apparatuses 1104-1106 as group B, and communication terminal apparatuses 1107-1109 as group C.

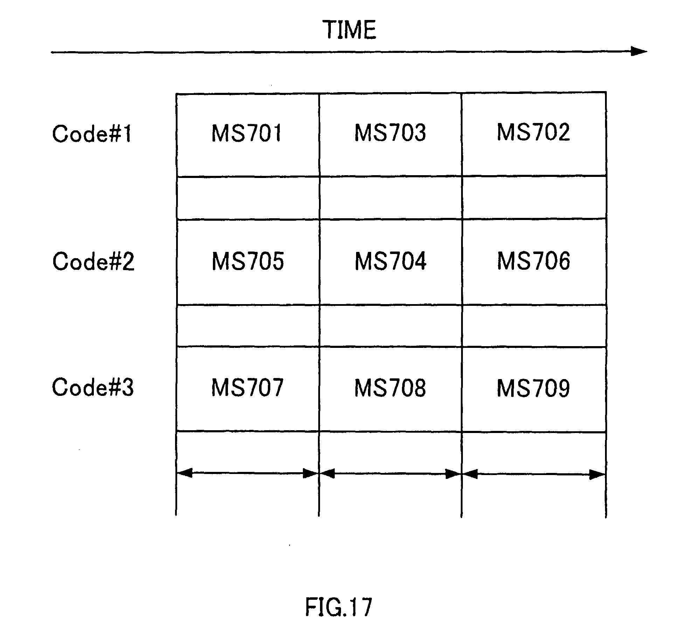

Then, as shown in FIG.17, time multiplexer 1003 time multiplexes the control signals to transmit to the communication terminal apparatuses belonging under the groups (A-C), and modulator 1004 multiples unique spreading code (#1-#3) upon each group. Moreover, AAA transmission controller 1005 generates directivity A-C on a per group basis.

In the downlink channels, by thus dividing close communication terminal apparatuses into a number of groups and time multiplexing and transmitting the control signals of the individual channels by the same directivity on a per groups basis, interference between the communication terminal apparatuses can be minimized.

Moreover, likewise, in the uplink channels, by time multiplexing and transmitting the control signals for the individual channels by the same directivity on a per group basis, interference at the base station apparatus can be minimized, thereby improving the receiving performance of the individual channels and moderating the influence of the density (bias) of the communication terminal apparatuses described in the sixth embodiment.

According to this embodiment, in case it is not possible to time multiplex all control signals such as when there are many communication terminal apparatuses in one group, not only time multiplexing, but also code multiplexing is possible. Moreover, upon time multiplexing, the number of communication terminals present in a group may not be a multiple of the communication terminals that can be time multiplexed. In such case, neighboring groups might make up for each other.

Although a case has been described in this embodiment where, in the same group, the individual channels of the downlink channels are transmitted using the same directivity, and yet this directivity needs not be the same. That is, to apply unique directivity to a time multiplexed communication terminal, directivity may be changed for every time multiplexing unit.

As described above, according to the present invention,by scheduling uplink packet transmission based on the locations of communication terminal apparatuses, the throughput of uplink packet transmission can be improved.

To be more specific, the uplink packet transmission method of the present invention schedules uplink transmission in such a way that does not allow communication terminals that belong under varying cells and that are near neighboring cell edges to execute uplink transmission at the same time.

According to this method, the communication terminals at the cell edges of varying cells do not execute uplink transmission at the same time, so that interference in uplink transmission between the cells can be minimized and, as a result, uplink transmission throughput can be improved.

The uplink channel packet transmission method of the present invention forms multiple sectors and, on a per sector basis, executes scheduling in relation to uplink transmission for multiple communication terminals in the sectors. By this means, where a communication terminal belongs under a sector, its influence upon other sectors upon transmission is found out in addition to its channel quality in the hosting cell, and the scheduling in the cell is executed taking into account this influence upon other sectors.

According to this method, it is possible to prevent communication terminals that might greatly interfere with other sectors from executing uplink transmission at the same time, so that interference between the sectors due to uplink transmission can be minimized, and, as a result, uplink transmission throughput can be improved.

Further, the base station apparatus according to the present invention executes scheduling in relation to uplink transmission for multiple communication terminals in cells, and employs a configuration that has a section which finds out the presence of communication terminals near neighboring cell edges, a scheduler which executes scheduling in such a way that does not allow the communication terminals near the neighboring cell edges to execute uplink transmission at the same time, and a transmitter which transmits scheduling data to the communication terminals.

According to this configuration, the communication terminals at the cell edges of the varying cells do not execute uplink transmission at the same time, so that interference between the cells in uplink transmission can be minimized, and, as a result, uplink transmission throughput can be improved.

Further, the base station apparatus of the present invention executes scheduling in relation to uplink transmission for multiple communication terminals in cells and employs another configuration that has a channel quality detector which detects channel quality with each communication terminal, a first scheduler which determines order of the uplink transmission in descending order of channel quality, a second scheduler which determines the order of the uplink transmission randomly; and a selector which, at time when a communication terminal near a cell edge of a neighboring cell is allowed uplink transmission or when uplink transmission is likely to be executed, selects the transmission order determined by the first scheduler, and which, at other times, selects the transmission order determined by the second scheduler.

According to this configuration, while the transmission order by the first scheduler is selected, those communication terminals that are near the base station and have good channel quality are assigned transmission with high priority, so that scheduling is executed at good throughput. On the other hand, while the transmission order by the second scheduler is selected, all the communication terminals have same the chance of being assigned transmission, so that fairness is maintained. However, when the second scheduler is selected, compared to when the first scheduler is selected, the communication terminals near the cell edge have higher likelihood of being assigned transmission. Taking this into account, when a communication terminal at the cell edge of a neighboring cell is allowed uplink transmission, or when uplink transmission is likely to be executed, the selector is configured to select the first scheduler, not the second scheduler. As a result, the likelihood is low that communication terminals near the cell edges of the varying cells execute uplink transmission at the same time, so that both the fairness and throughput of scheduling are maintained.

Further, the base station apparatus of the present invention executes scheduling in relation to uplink transmission for multiple communication terminals in cells and employs another configuration that has a channel quality detector that detects channel quality which detects channel quality with each communication terminal, a first scheduler which determines order of the uplink transmission in descending order of channel quality, a second scheduler which determines the order of the uplink transmission randomly, and a selector which selects the transmission order determined by the first scheduler while the same scheduling as by the second scheduler is executed in a neighboring cell.

According to this configuration, the neighboring cells do not select the transmission order by the second scheduler at the same time, so that the likelihood is low that uplink transmission is executed by the communication terminals near the cell edges of the varying cells. As a result, the fairness and throughput of scheduling are both maintained.

Further, the base station apparatus according to the present invention executes scheduling in relation to uplink transmission for multiple communication terminals in cells and employs another configuration that has a directional receiver which directionally receives a signal from a communication terminal, and a scheduler which schedules uplink transmission in directivity range such that neighboring cells do not have overlapping directional reception orientations at a given time.

According to this configuration, the arrival directions of the signals from the communication terminals selected on a per cell basis become relatively distant, so that, by means of the directional receiver, interference from other communication terminals can be more readily minimized.

Further, the base station apparatus according to the present invention executes scheduling in relation to uplink transmission for multiple communication terminals in sectors and employs another configuration that has a directional receiver which directionally receives a signal from a communication terminal, and a scheduler which schedules uplink transmission in such a way that does not allow communication terminals in sectors having neighboring directional orientations to execute uplink transmission at the same time.

According to this configuration, the communication terminals in the sectors having neighboring directional orientations do not execute uplink transmission at the same time, so that interference upon uplink transmission can be minimized.

Further, the base station apparatus according to the present invention employs another configuration that has a section which finds out the presence of communication terminals near the cell edges of neighboring cells and that executes scheduling only when there are communication terminals near the cell edges of the neighboring cells.

According to this configuration, while there are no communication terminals near the cell edges of the neighboring cells, any scheduling processing can be executed, not limited to the above described scheduling processing, so that only when interference is likely to occur due to uplink transmission is the scheduling processing method limited. As a result, the diversity of scheduling can be maintained.

Further, the base station apparatus of the present invention forms multiple sectors, and, on a per sector basis, executes scheduling in relation to uplink transmission for multiple communication terminals in the sectors, and employs a configuration that has a channel quality acquirer which acquires channel quality of a communication terminal on a per sector basis and a priority calculator which heightens priority when the channel quality is good, and ranks the communication terminal on a per sector basis. In this configuration, when a communication terminal has good channel quality in other sectors as well, a scheduler schedules uplink transmission in such a way that, regardless of priority by the priority calculator, while the communication terminal is allowed uplink transmission, the communication terminals in other sectors are not allowed uplink transmission.

According to this configuration, communication terminals that might greatly interfere with each other can be prevented from executing uplink transmission at the same time, so that interference between the sectors due to uplink transmission can be minimized, and, as a result, uplink transmission throughput can be improved.

Further, the wireless base station system of the present invention employs a configuration that has first and second base station apparatuses which form neighboring cells and execute uplink transmission scheduling for communication terminals in the cells, and a high network apparatus which connects between the base station apparatuses. In this configuration, each of the first and second base station apparatuses makes reference to scheduling information of the other received from the high network apparatus, and schedules uplink transmission in such a way that does not allow a communication terminal near its cell edge and a communication terminal near a cell edge of the other to execute uplink transmission at the same time.

According to this configuration, the communication terminals at the cell edge do not execute uplink transmission at the same time, so that interference between the cells due to uplink transmission can be minimized, and, as a result, uplink transmission throughput can be improved.

Further, the high network apparatus of the base station apparatus of the present invention employs a configuration that is connected with multiple base station apparatuses, and that, from those base station apparatuses among the base station apparatuses that form neighboring cells, allows only one or a specific number of base station apparatuses to assign uplink transmission to a communication terminal near a cell edge.

According to this configuration, the neighboring base station apparatuses connected with the high network apparatus do not execute scheduling in such a way that the communication terminals at the cell edges of the neighboring cells execute uplink transmission at the same time. As a result, interference between the cells due to uplink transmission can be minimized, and uplink transmission throughput can be improved.

Further, the base station apparatus according to the present invention employs another configuration that has a priority determiner which determines priority of a communication terminal apparatus in communications, a transmission destination determiner which determines one or multiple communication terminal apparatuses to allow packet transmission based on each terminal's present direction and priority, and a directional transmitter which transmits information instructing the determined communication terminal to transmit packet signals.

Further, the transmission destination determiner of the base station apparatus of the present invention employs a configuration that first selects the communication terminal apparatus of the highest priority and next selects the communication terminal of the highest priority among the communication terminals excluding those that receive great interference from the packet signals transmitted from the first selected communication terminal apparatus.

Further, the base station apparatus of the present invention employs a configuration that has a demodulator which demodulates a receiving signal and corrects a CIR based on information that is included in the demodulated signal and that indicates each communication terminal's transmission power. In this configuration, a priority determiner determines priority based on the CIR output from the demodulator and a transmission destination determiner determines the coding rate and modulation scheme of the packet signal transmitted from the communication terminal apparatus based on the CIR output from the demodulator.

According to these configurations, multiple communication terminal apparatuses that interfere little with each other can transmit packets at the same time, so that, in a CDMA wireless communications system using adaptive array, high-speed packet transmission can be executed efficiently.

Further, the base station apparatus of the present invention employs a configuration that has a density calculator which calculates the density of each communication terminal apparatus. In this configuration, a priority determiner determines priority by correcting the CIR output from the demodulator by the density.

Further, the transmission destination determiner of the base station apparatus of the present invention employs a configuration that determines the coding rate and modulation scheme of a packet signal transmitted from a communication terminal apparatus based on the CIR corrected by the density.

According to these configurations, the CIR of the individual channels of the uplink channels can be corrected based on the density, and priority can be determined based on the corrected CIR, so that the accuracy of scheduling can be improved by supporting the terminals that, despite being near the base station and suffering little path loss, in the past have had deteriorating CIR due to the presence of communication terminals having close directivity and causing interference that cannot be cancelled by means of adaptive array.

Further, the base station apparatus of the present invention employs a configuration that divides close communication terminals into multiple groups and transmits control signals of the individual channels using directivities of low correlation between the groups.

According to this configuration, interference at each communication terminal apparatus and base station apparatus can be minimized, so that the receiving performance of the individual channels can be improved and the influence of the density of the communication terminals can be moderated.

Further, the uplink channel packet transmission method of the present invention employs a method whereby a base station apparatus determines one or multiple communication terminal apparatuses to allow transmission of packets based on the present direction and priority of each communication terminal apparatus, and the communication terminal apparatus determined thus transmits packet signals to the base station apparatus.

According to this method, multiple communication terminal apparatuses causing little interference to each other can transmit packets at the same time, so that, in a CDMA wireless communications system using adaptive array, high-speed packet transmission can be executed efficiently.

Further, the uplink channel packet transmission method of the present invention employs a method that controls the modulation scheme and coding rate of a packet signal based on the density of a communication terminal apparatus.

According to this method, the CIR of the individual channels of the uplink channels can be corrected based on the density, and priority can be determined based on the corrected CIR, so that the accuracy of scheduling can be improved by supporting the terminals that, despite being near the base station and suffering little path loss, in the past have had deteriorating CIR's, due to the presence of the communication terminals having close directivity and causing interference that cannot be cancelled by means of adaptive array.

Further, the uplink channel packet transmission method of the present invention employs a method that divides close communication terminals into multiple groups and transmits control signals of the individual channels using directivities of low correlation between the groups.

According to this method, interference at each communication terminal apparatus and base station apparatus can be minimized, so that the receiving performance of the individual channels can be improved and the influence of the density of the communication terminals can be moderated.

This application is based on Japanese Patent Application No.2002-105513 filed on April 8, 2002, and Japanese Patent Application No.2002-172864, filed on June 13, 2002, entire content of which is expressly incorporated by reference herein.

### Industrial Applicability

The present invention suits for use with a base station apparatus used in a wireless communications system that executes uplink packet transmission.

## Claims

1. A base station apparatus that executes scheduling in relation to uplink transmission for a plurality of communication terminals in a cell, comprising:
a scheduler that executes said scheduling in such a way that does not allow communication terminals near neighboring cell edges to execute uplink transmission at same time; and
a transmitter that transmits scheduling data to said communication terminals.

2. The base station apparatus according to claim 1, wherein said scheduler comprises:
a first scheduler that determines order of said uplink transmission in descending order of channel quality;
a second scheduler that determines said order of said uplink transmission randomly; and
a selector that, at time when a communication terminal near a cell edge of a neighboring cell is allowed uplink transmission or when uplink transmission is likely to be executed, selects the transmission order determined by said first scheduler, and, at other times, selects the transmission order determined by said second scheduler.

3. The base station apparatus according to claim 1, wherein said scheduler comprises:
a first scheduler that determines order of said uplink transmission in descending order of channel quality;
a second scheduler that determines said order of said uplink transmission randomly; and
a selector that selects the transmission order determined by said first scheduler while same scheduling as by said second scheduler is executed in a neighboring cell.

4. The base station apparatus according to claim 1, further comprising a directional receiver that directionally receives a signal from a communication terminal, wherein said scheduler schedules uplink transmission in such a way that does not allow communication terminals in sectors having neighboring directional orientations to execute uplink transmission at same time.

5. The base station apparatus according to claim 1, comprising:
a channel quality acquirer that acquires channel quality of a communication terminal on a per sector basis; and
a priority calculator that heightens priority when said channel quality is good, and ranks said communication terminal on a per sector basis,
wherein, when a communication terminal has good channel quality in other sectors as well, said scheduler schedules uplink transmission in such a way that, regardless of the transmission order determined by said first scheduler, while said communication terminal is alloweduplink transmission, the communication terminals in other sectors which said communication terminal has good channel quality are not allowed uplink transmission.

6. A scheduling method, comprising scheduling uplink transmission in such a way that does not allow communication terminals belonging under varying cells and being near neighboring cell edges to execute uplink transmission at same time.

7. The scheduling method according to claim 6, further comprising:
with respect to said communication terminals belonging under varying cells and being near neighboring cell edges, finding out influence upon other sectors upon transmission, in addition to reception quality in hosting sectors; and
executing uplink transmission scheduling in such a way that the communication terminals that cause great interference to said other sectors do not execute uplink transmission at same time.

8. A wireless base station system comprising:
first and second base station apparatuses that form neighboring cells and that schedule uplink transmission for communication terminals in respective cells; and
a high network apparatus that connects between the base station apparatuses,
wherein each of said first and second base station apparatuses makes reference to scheduling information of the other received from said high network apparatus, and schedules said uplink transmission in such a way that does not allow a communication terminal near its cell edge and a communication terminal near a cell edge of the other to execute uplink transmission at same time.

9. Ahigh network apparatus of a base station apparatus, said high network apparatus connected with a plurality of base station apparatuses, and, from those base station apparatuses among said plurality of base station apparatuses that form neighboring cells, allows only one or a specific number of base station apparatuses to assign uplink transmission to a communication terminal that is at a cell edge and that influences other cells.
